# EUROPÄISCHE PATENTANMELDUNG

(11) **EP 2 727 775 A1**
(43) Veröffentlichungstag der Anmeldung: **07.05.2014**
(21) Anmeldenummer: 13004883.8
(22) Anmeldetag: 10.10.2013
(51) Int. Cl.: B60R 21/215, B60R 21/216

(54) **Airbag-Abdeckung mit mindestens einer Klappe**

(30) Priorität: 31.10.2012 DE 102012021315
(71) Anmelder: K.L. Kaschier- und Laminier GmbH, 48455 Bad Bentheim-Gildehaus (DE)
(72) Erfinder: Höing, Maik, 48712 Gescher (DE); Roring, Albert, 48599 Gronau-Epe (DE); Schulze Wehninck, Rembert, 81667 München (DE)
(74) Vertreter: Cohausz Hannig Borkowski Wißgott

(57) **Zusammenfassung**

Die Erfindung betrifft eine Airbag-Abdeckung mit mindestens einer Klappe (1), die im Material der Abdeckung und/oder am Rand des Materials von den die Klappenränder bildenden Sollbruchlinien (2a) und einem Scharnierrand umgrenzt ist, um nach dem Auslösen des Airbags (4) an den Sollbruchlinien (2a)zu reißen und um das Scharnier (3) zu verschwenken, ohne am Scharnier (3) abzureißen, wobei das Material der Abdeckung, insbesondere des Deckels im Bereich des Scharniers, mindestens eine längs des Scharniers (3) verlaufende Falte (4a, 4b) oder Faltung bildet. Die Erfindung betrifft ebenfalls eine Maschine zum Herstellen einer solchen Abdeckung. Ein heißes Schwert ist vorgesehen zur Warmverformung des Materials der Klappe zu einer Falte.

## Beschreibung

Die Erfindung betrifft eine Airbag-Abdeckung mit mindestens einer Klappe, die im Material der Abdeckung und/oder am Rand des Materials von den die Klappenränder bildenden Sollbruchlinien und einem Scharnierrand umgrenzt ist, um nach dem Auslösen des Airbags an den Sollbruchlinien zu reißen und um das Scharnier zu verschwenken, ohne am Scharnier abzureißen.

Es sind Airbag-Abdeckungen aus Kunststoff bekannt, die eine oder zwei Klappen bilden, die jeweils an drei Rändern Sollbruchlinien besitzen und nach Auslösen des Airbags dort aufreißen, und an dem vierten Rand ein Scharnier bilden, um das die Klappe verschwenkt, ohne dort abzureißen, so dass sichergestellt ist, dass die Klappe nicht in den Innenraum des Kraftfahrzeugs fliegt. Dieser sichere Halt der Klappe im Bereich des Scharniers wird durch zusätzliche nicht reißende Fäden im Scharnierbereich erreicht, wie dies aus der EP 2 057 044 bekannt ist. Diese bekannten Airbag-Abdeckungen sind aufwändig in der Herstellung.

Aufgabe der Erfindung ist es, eine Airbag-Abdeckung der eingangs genannten Art so zu verbessern, dass die Abdeckung und das Scharnier einfach in der Herstellung und Verarbeitung sind und das Scharnier die Sicherheit bietet, dass in seinem Bereich die Klappe nicht abreißt.

Diese Aufgabe wird erfindungsgemäß dadurch gelöst, dass das Material der Klappe(n) im Bereich des Scharniers mindestens eine längs des Scharniers verlaufende Falte oder Faltung bildet.

Die Falte(n) oder Faltung erzeugen nach dem Auslösen des Airbags und beim Verschwenken der Klappe eine zusätzliche Wegstrecke bzw. eine zusätzliche freie Weglänge im Bereich des Scharniers, wodurch sichergestellt ist, dass die Klappe am Scharnier leicht verschwenkt ohne dort abzureißen. Und dies bei einfacher Herstellung.

Vorteilhafte Ausgestaltungen der Erfindung sind in den Unteransprüchen 2 bis 9 aufgeführt.

Eine besonders einfache und preiswerte Herstellung ist durch eine Maschine gegeben, wenn sie mindestens ein heißes Schwert aufweist zur Warmverformung des Materials der Klappe(n) insbesondere des thermoplastischen Polypropylen-, oder Polyester-Verbundwerkstoffes im Bereich des Scharniers zu mindestens einer Falte. Hierzu sind weitere vorteilhafte Ausgestaltungen in den Ansprüchen 11 bis 16 angegeben.

Vorteilhafte Ausführungsbeispiele der Airbag-Abdeckung und seiner Herstellung sowie eine Maschine zur Herstellung werden im Folgenden näher beschrieben. Es zeigen
- Fig. 1: im Ausschnitt einen senkrechten Schnitt durch eine Ausführungsform einer Airbag-Abdeckung,
- Fig. 2 bis 5: schematisch dargestellte Querschnitte durch das Scharnier eines Airbag-Deckels in V-, N-, W- und M-Form in nicht gepresster Form a), in gepresster Form b) und stark gepresster Form c),
- Fig. 6: eine Maschine zum Herstellen der Falten, Nuten und/oder Rinnen in das Material der Abdeckung oder Klappe.

Die Aribag-Abdeckung 2 wird von einem starren und/oder steifen, plattenförmigen Kunststoffmaterial gebildet und ist damit ein relativ dünner, flacher, ebener, fester Gegenstand mit überall gleicher Dicke und begrenzter Elastizität (im Gegensatz zu einer Folie).

Die Airbag-Abdeckung 2 besteht hierbei aus nur einem einzigen thermoplastischen Kunststoff-Material insbesondere aus thermoplastischen Polypropylen (PP). Das Material ist ein plattenförmiger eigenverstärkter Verbundwerkstoff (Compound/Composite), wobei sich homogene Polypropylen-, copolymere Polyolefin-, hogogene Polyester-, oder copolymere Polyesterfolien mit weiteren Verstärkungslagen abwechseln, die aus Polypropylen-, bzw. Polyester-Bändern bestehen, oder solche aufweisen. Hierbei bilden die Bänder eine dünne Schicht, in denen die Bänder entweder geordnet liegen insbesondere wie ein Gewebe gelegt oder verwebt sind, oder sie liegen ungeordnet kreuz und quer. Die Folien-Lagen und die Bänder-Lagen (Verstärkungslagen) wechseln einander ab und die Gesamtanzahl der Bänder-Lagen beträgt mindestens zwei insbesondere drei bis acht Lagen insbesondere drei bis acht Lagen bei einer Gesamtdicke von 0,35 mm bis 3 mm. Unter Druck und Zufuhr von Wärme verschmelzen alle Schichten zu einer einzigen Platte, die nur aus Polypropylen-, bzw. Polyester-Schichten besteht.

Die weiteren zwischen oder auf den Folien-Lagen befindlichen Verstärkungslagen weisen in alternativen Ausführungen statt der Bänder Fasern oder Fäden auf, die wiederum aus Polypropylen-, bzw. Polyester-Folien bestehen und geordnet (auch als Gewebe) oder ungeordnet angeordnet sind.

In einer weiteren Ausführung ist in einer ersten Alternative die Oberseite und/oder die Unterseite des Materials der Abdeckung 2 mit einer thermoplastischen Folie insbesondere aus Polyester oder Polypropylen kaschiert. In einer zweiten Alternative ist die Oberseite und/oder die Unterseite des Materials der Abdeckung mit einem Glasfaserflies oder einem Glasfasergewebe kaschiert.

In der plattenförmigen Airbag-Abdeckung sind eine oder zwei Klappen 1, die den Airbag 4 bedecken, in der Weise eingebracht, dass innerhalb der Abdeckungsplatte an drei Rändern jeder Klappe Sollbruchlinien angeordnet sind, die die gesamte Platte durchdringen und nach dem Auslösen des Airbags 4 die Klappe 1 freigeben. An dem vierten Rand befindet sich ein länglicher Scharnierbereich mit einem Scharnier 3, um den die Klappe 1 nach dem Auslösen verschwenkt ohne abzureißen. Die Sicherheit gegen ein Abreißen wird insbesondere durch die Bänder, Fasern oder Fäden in den Verstärkungslagen erreicht.

In einer weiteren, nicht dargestellten Ausführung ist der Deckel in der Unterseite einer Kunststoffschicht (insbesondere Spritzgussschicht aus Polypropylen mit Glasfasern) eingelassen, wobei zumindest an einer Seite die Sollbruchlinie nicht vom Material des Deckels, sondern außerhalb des Materials des Deckels in der Kunststoffschicht angeordnet ist.

In einer weiteren Ausführung wird die Sicherheit gegen ein Abreißen noch dadurch erhöht, dass im Bereich des Scharniers 3 in die Platte mindestens eine Falte, eine Nut oder eine Rinne eingeformt wird, die längs der Scharnierlängserstreckung bzw. des Klappenrandes im Scharnier verläuft und dadurch eine zusätzliche Materiallänge quer zur Scharnierlängserstreckung erzeugt. Diese zusätzliche Materiallänge im Scharnierbereich gewährt genügend Weglänge beim Verschwenken der Klappe um das Scharnier, so dass sichergestellt ist, dass die Klappe nicht abreißt.

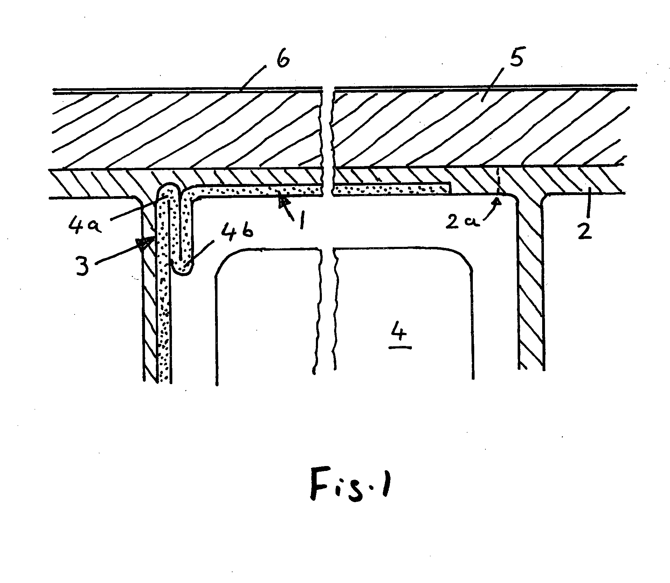

Fig. 1 zeigt im Schnitt eine Ausführungsform mit einem Airbagdeckel bzw. Klappe 1 über einem Airbag 4, der in der Unterseite der Airbag-Abdeckung 2 aus Kunststoff eingelassen ist, wobei die Airbag-Abdeckung 2 eine Spritzgussschicht aus Polypropylen insbesondere mit Glasfasern ist. Die Abdeckung 2 weist auf drei Seiten Sollbruchlinien auf, die beim Auslösen des Airbags 4 reißen.

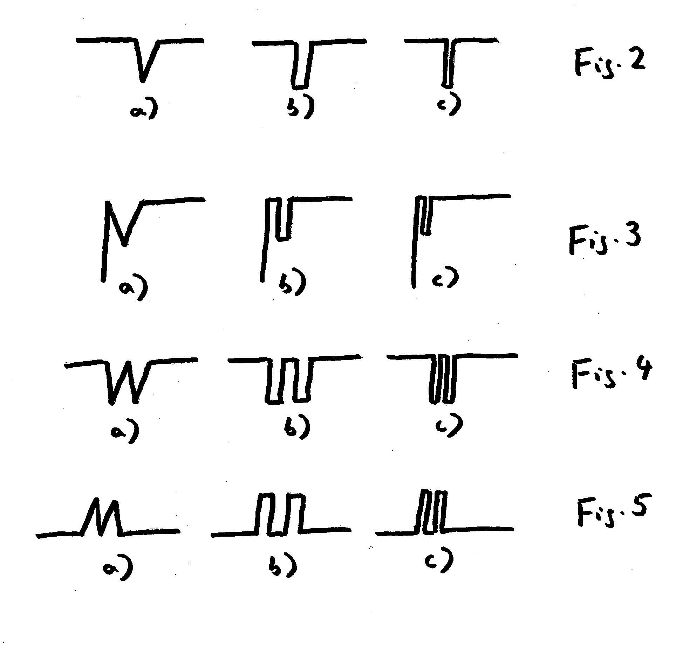

Der Deckel bzw. die Klappe 1 aus dem o. g.eigenverstärktem thermoplastischem Verbundwerkstoff bildet an einem Rand ein Scharnier 3, indem der plattenförmige Werkstoff zweimal gefaltet ist, so dass er dort zwei Falten 4a, 4b bildet, die längs des Randes und damit des Scharniers verlaufen in Form eines gepressten "N". Hierbei können die Falten 4a, 4b eng aneinander liegen, wie in Fig. 1 und Fig. 3c) dargestellt, oder zwischen sich Zwischenräume bilden, wie die Fig. 3 unter a) und b) zeigt. Das Herstellungsverfahren wird noch dadurch vereinfacht, dass ein Verkleben der Faltung durch das Anschmelzen der Oberfläche des eigenverstärkten Verbundwerkstoffes erfolgt. Dieses Anschmelzen kann dabei vollflächig, als auch partiell sein. Durch diese Verklebung wird eine beständige formstabile Faltung gewährleistet.

Die Airbag-Abdeckung 1, 3 ist oben noch durch eine Schaumschicht 5 abgedeckt, die außenseitig eine Außenhaut 6 trägt, die mitaufreißt.

Wie die Fig. 2, 4 und 5 zeigen kann die Faltung im Bereich des Scharniers 3 auch einfach (Fig. 2) oder mehrfach insbesondere dreifach (Fig. 4 und 5) sein und somit eine, zwei oder mehr Falten besitzen. Ferner kann die Faltung durch Nuten oder Rinnen gebildet sein.

Statt einer Klappe kann das Material der Abdeckung eines Airbags auch zwei Klappen bilden, die voneinander durch eine Sollbruchlinie getrennt sind, und an deren beiden Außenrändern jeweils ein Scharnier mit Falten/Faltungen angeordnet ist, wobei die Scharniere mit den Falten/Faltungen und die mittige Sollbruchlinie zueinander parallel liegen.

Zum Erzeugen der Falte(n), der Nut(en) oder der Rinne(n) wird vorzugsweise ein erwärmtes Schwert (heißes Schwert) verwendet, das in die Platte des Deckels/der Klappe 1 im Bereich des Scharniers hineingedrückt wird und hierbei das thermoplastische Material verformt, wobei das Material zusätzlich vor der Verformung vorzugsweise partiell bzw. vollflächig erhitzt wird.

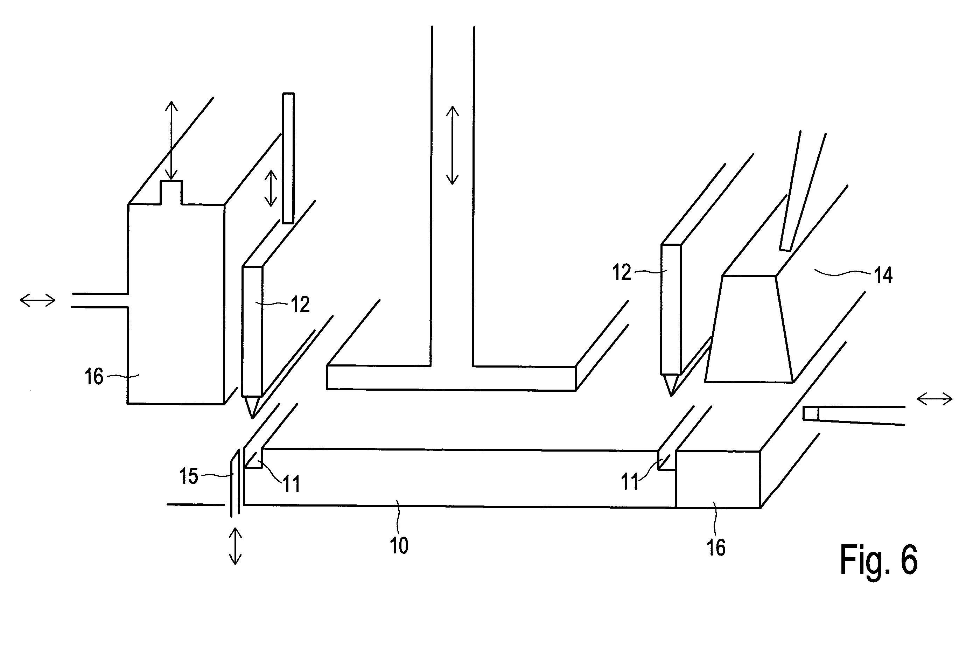

Die in Fig. 6 dargestellte Maschine zum Erzeugen der Falte(n) 4a, 4b, Nut(en) und/oder Rinne(n) im plattenförmigen Material weist eine Unterlage 10 auf, auf die eine Platte gelegt wird. Hierbei weist die Unterlage 10 mindestens eine Nut 11 auf, über der ein Schwert 12 senkrecht verfahrbar gelagert ist, um beim Herunterfahren das Material der Platte in die Nut hineinzudrücken und hierdurch eine Falte in die Platte und damit der Klappe 1 zu formen, wie sie in Fig. 2a) im Schnitt dargestellt ist. Während des Warm- oder Kaltverformens wird die Platte durch mindestens zwei Stempel 13, 14 gehalten, die zu beiden Seiten der Nut 11 die Platte auf die Unterlage 10 drücken.

Sollen einfache Falten nach Fig. 3 erstellt werden, so besitzt die Maschine noch ein von unten hochfahrendes zweites Schwert 15 und eine seitliche, waagerecht fahrende Backe 16. Bei dreifachen Faltungen nach Fig. 4 und 5 sind drei Schwerter vorgesehen.

Bei einer Warmverformung durchfährt das Material der Platte einen Vorwärmofen, der die Platte auf eine Temperatur von 90 bis 100 Grad Celsius erwärmt, ehe sie in der Maschine die Faltung erhält.

Das grundlegende Konzept der Anlage weist somit folgende Merkmale auf:
- Plattenspeicher
- Durchlaufofen, um Material auf 90°C vorzuwärmen
- Ausrichten der Stanzteile
- Partielle/vollflächige Erwärmung auf > 110°C
- Umformung zu der vorgegebenen Geometrie
- Abkühlen des umgeformten Materials
- Auswurf nach Erreichung einer bestimmten Temperatur

Der Plattenspeicher, der die Funktion der Bevorratung der vereinzelten Zuschnitte hat, ist in der Außengeometrie der Zuschnitte stufenlos verstellbar, mit einer maximalen Größe von 400 mm x 400 mm. Die Auslassöffnung, durch die die einzelnen Platten entnommen werden, ist ebenfalls stufenlos verstellbar, so dass unterschiedlichste Dicken verarbeitet werden können. Zur Überwachung werden Lichtschranken bzw. Sensoren angebracht, die einen Leerlauf vermeiden sollen, indem akustische sowie visuelle Signale ausgegeben werden können.

Um die latent blockierten Spannungen, die durch den Herstellungsprozess des thermoplastischen eigenverstärkten Verbundwerkstoffes aufgetreten sind, zu lösen, wird das Material auf 90°C vorgewärmt. Diese Vorwärmung kann durch Kontakt-, Strahlungs- oder Konvektionswärme erfolgen. Bei der beschriebenen Anlage wird die Erwärmung der Zuschnitte mittels Konvektionswärme erreicht, wobei hier nur eine Eigenkonvektion zum Tragen kommt, ohne zusätzlich eingebrachte Konvektion, wobei der Durchlaufofen so isoliert wird, dass der Energieverlust nur minimal ist. Die Dauer der Erwärmung ist mit mindestens 30 Sekunden, vorzugsweise mit vier Minuten, vorgesehen.

Nachdem die latent blockierten Spannungen in dem Zuschnitt durch die vorhergehende Temperaturbehandlung gelöst wurden, müssen diese Zuschnitte ausgerichtet werden, so dass die Umformung(en) konstant an der gleichen Stelle erfolgt. Diese erfolgt über seitliche Anschläge, die je nach Geometrie eingestellt werden.

Die Erhitzung des Materials auf die nötige Umformtemperatur kann ebenfalls über die beschriebenen Methoden (Kontakt-, Strahlungs- oder Konvektionshitze) erfolgen. In der vorliegenden Beschreibung der Anlage erfolgt die Erhitzung mittels Kontakthitze über metallische Platten, in denen Heizpatronen eingearbeitet werden. Diese Platten werden in vorzugsweise vier Zonen unterteilt, welche separat gesteuert werden. Die für die Umformung nötige Temperatur liegt bei > 110°C, vorzugsweise bei 145°C, welche durch Sensoren permanent überwacht wird. Die Größe der Heizplatten ist wie die gesamte Anlage auf eine maximale Größe der Zuschnitte auf 400 mm x 400 mm ausgelegt.

Die Verformung der Zuschnitte erfolgt über das Eintauchen von beheizbaren Schwertern 12, 15, welche dann eine Faltung in das Material einbringen. Die exakte und vor allem gleichmäßige Faltung ist für den Artikel Airbag-Abdeckung besonders wichtig. Um dieses zu ermöglichen, wird das Material, bevor die Schwerter in das Material eintauchen, ein Stempel 13 auf den Zuschnitt abgesenkt, welcher dann das Material während der Umformung in Position hält. Dieser Stempel kann bei der Notwendigkeit einer Umformung zu einem 3-D Teil mit der nötigen Geometrie versehen werden, so dass Rundungen oder ähnliche 3-D Geometrien über diesen Stempel erfolgen. Hierbei wird eine positive/negative Form auf den Stempel bzw. auf die Platte befestigt. Durch das Absenken des Stempels wird dann die 3-D Geometrie in das Material eingebracht, auch hier ist dann möglich, zusätzliche Faltungen durch die beschriebenen Schwerter zu erreichen.

Wird eine Faltung mit geschlossener Rundung gefordert, wird das Schwert nach Eintauchen wieder herausgefahren und seitliche Backen 16 drücken die Faltung zusammen, da beim Hinterspritzprozess keine Spritzgussmasse in die Falte gelangen darf, da diese die Falte verkleben könnte.

Das Bauteil wird solange in der Position gehalten, bis die Temperatur unter die Verformungstemperatur gefallen ist, vorzugsweise 70°C. Um einen

Temperaturschock bei der Verformung zu vermeiden, sind alle Werkstoffe, die mit dem Material in Kontakt kommen, auf eine Temperatur von mindestens 60°C erwärmt.

Der Umformprozess gestaltet sich somit in mehrere Teilabschnitte, die nachfolgend in der Bearbeitungsreihenfolge aufgeführt sind.
- Vereinzelung (Stanzen, Lasern, Wasserstrahlschneiden) der Plattenware in die entsprechende Größe, je nach Modell.
- Erwärmen (Kontakt-, Strahlungs-, Konvektionswärme; Kombinationen aus mehreren Varianten) der vereinzelten Zuschnitte auf ca. 90°C, um Spannungen aus dem Material zu lösen
- Ausrichten der vereinzelten Zuschnitte
- Erhitzung (Kontakt-, Strahlungs-, Konvektionswärme; Kombinationen aus mehreren Varianten) der vereinzelten Zuschnitte auf > 100°C partiell, wo umgeformt werden soll, oder vollflächig
- Einbringung der freien Weglänge durch ein kaltes oder beheiztes Schwert sowie Einbringung von zusätzlichen bauteilbedingten Verformungen
- Auskühlen der verformten Bauteile unter 100°C, vorzugsweise unter 60°C
- Entnahme der verformten und unter Verformungstemperatur ausgekühlten Bauteile.

Der Umformprozess des eigenverstärkten thermoplastischen Verbundwerkstoffes ist jedoch nicht nur auf die Einbringung der Falte entlang der Scharnierlinie beschränkt, vielmehr ist es durch den oben beschriebenen Prozess möglich, auch andere Verformungen wie beispielsweise Rundungen in dem gesamten Bauteil einzubringen, so dass neben der freien Länge auch ein 3-D Bauteil geformt werden kann.

## Patentansprüche

1. Airbag-Abdeckung mit mindestens einer Klappe (1), die im Material der Abdeckung und/oder am Rand des Materials von den die Klappenränder bildenden Sollbruchlinien (2a) und einem Scharnierrand umgrenzt ist, um nach dem Auslösen des Airbags (4) an den Sollbruchlinien zu reißen und um das Scharnier (3) zu verschwenken, ohne am Scharnier abzureißen, **dadurch gekennzeichnet, dass** das Material der Kappe(n) (1) im Bereich des Scharniers (3) mindestens eine längs des Scharniers verlaufende Falte (4a, 4b) oder Faltung bildet.

2. Airbag-Abdeckung nach Anspruch 1, **dadurch gekennzeichnet, dass** die längs des Scharniers (3) verlaufenden schmalen länglichen Faltflächen bzw. Faltlagen der Falte(n) (4a, 4b) oder Faltung eng aneinander liegen mit jeweils keinem oder schmalem Zwischenraum zwischen den Faltflächen bzw. Faltlagen.

3. Airbag-Abdeckung nach Anspruch 2, **dadurch gekennzeichnet, dass** die Faltenlage (4a, 4b) aneinander durch partielles oder vollflächiges Anschmelzen der Oberfläche befestigt sind.

4. Airbag-Abdeckung nach Anspruch 2 oder 3, **dadurch gekennzeichnet, dass** die Faltflächen/Faltlagen (4a, 4b) zueinander exakt oder im Wesentlichen parallel liegen.

5. Airbag-Abdeckung nach einem der vorherigen Ansprüche, **dadurch gekennzeichnet, dass** die Oberseite und/oder die Unterseite des Materials der Abdeckung (2) mit einer thermoplastischen Folie insbesondere aus Polyester oder Polypropylen kaschiert ist.

6. Airbag-Abdeckung nach einem der vorherigen Ansprüche, **dadurch gekennzeichnet, dass** das Material der Abdeckung (2) und/oder Klappe(n) (1) ein eigenverstärkter thermoplastischer Verbundwerkstoff ist, der mehrere übereinander liegende Lagen aus thermoplastischem Polypropylen oder Polyester aufweist, wobei Lagen aus homogener Polypropylenfolie, copolymerhaltiger Polyolefinfolie, homogener Polyesterfolie oder copolymerhaltiger Polyesterfolie mit Verstärkungslagen abwechseln, bei denen entweder das Polypropylen oder der Polyester band-, faserförmig oder fadenförmig ist, oder bei denen die Verstärkungslagen Polypropylen-, bzw. Polyester-Bänder und/oder Polypropylen-, bzw. Polyester-Fasern und/oder Polypropylen-, bzw. Polyester-Fäden aufweisen.

7. Airbag-Abdeckung nach Anspruch 6, **dadurch gekennzeichnet, dass** die Bänder, Fasern oder Fäden aus Polypropylen oder Polyester in den Verstärkungslagen ein Gewebe bilden.

8. Airbag-Abdeckung nach Anspruch 6, **dadurch gekennzeichnet, dass** die Bänder und/oder Fasern in den Verstärkungslagen ungeordnet kreuz und quer angeordnet sind.

9. Airbag-Abdeckung nach einem der vorherigen Ansprüche, **dadurch gekennzeichnet, dass** die Klappe(n) (1) nach ihrer Faltung von einer die Klappe(n) überdeckenden Kunststoffschicht umspritzt ist/sind, die die Abdeckung (2) bildet.

10. Maschine zum Herstellen einer Airbag-Abdeckung nach einem der vorherigen Ansprüche, **dadurch gekennzeichnet, dass** sie mindestens ein heißes Schwert (12, 15) aufweist zur Warmverformung des Materials der Klappe(n) (1) insbesondere des thermoplastischen Polypropylen-, oder Polyester-Verbundwerkstoffes im Bereich des Scharniers (3) zu mindestens einer Falte.

11. Maschine nach Anspruch 10, **dadurch gekennzeichnet, dass** sie das Material der Klappe(n) (1) vor der Verformung mit dem Schwert (12, 15) in den zu verformenden Bereichen oder vollflächig erwärmt.

12. Maschine nach Anspruch 10 oder 11, **dadurch gekennzeichnet, dass** sie eine Unterlage (10) aufweist, auf der das Material der Klappe(n) (1) aufgelegt wird, und die mindestens eine Nut (11) aufweist, in die das Material zum Bilden der Falte(n) oder Faltungen durch das Schwert gedrückt wird.

13. Maschine nach einem der Ansprüche 10 bis 12, **dadurch gekennzeichnet, dass** sie mindestens einen Stempel (13, 14) aufweist, mit dem das Material der Klappe(n) (1) neben dem Schwert (21) auf einer Unterlage (10) fest gehalten wird.

14. Maschine nach Anspruch 13, **dadurch gekennzeichnet, dass** zu beiden Seiten des Schwertes (12) jeweils ein Stempel (13, 14) zum Halten des Materials angeordnet ist.

15. Maschine nach einem der Ansprüche 10 bis 14, **dadurch gekennzeichnet, dass** zum Erzeugen einer W-, M- oder N-förmigen Falte mindestens ein zweites gegenläufiges Schwert (15) angeordnet ist.

16. Maschine nach einem der Ansprüche 10 bis 15, **dadurch gekennzeichnet, dass** zum Erzeugen eines nach unten abgewinkelten Materialbereichs eine Haltebacke (16) angeordnet ist, die sich rechtwinklig zu dem/den Stempel(n) (13, 14) bewegt.
